(19) Europäisches Patentamt
European Patent Office
Office européen des brevets

(11) EP 4 361 683 A1

(12) EUROPEAN PATENT APPLICATION

(43) Date of publication:
01.05.2024 Bulletin 2024/18

(51) International Patent Classification (IPC):
G01T 1/24 (2006.01)

(21) Application number: 22203271.6

(22) Date of filing: 24.10.2022

(52) Cooperative Patent Classification (CPC):
G01T 1/247; G01T 1/241

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: ASML Netherlands B.V.
5500 AH Veldhoven (NL)

(72) Inventors:
• JANSEN, Sven
5500 AH, Veldhoven (NL)
• RAMACHANDRA RAO, Padmakumar
5500 AH Veldhoven (NL)

(74) Representative: ASML Netherlands B.V.
Corporate Intellectual Property
P.O. Box 324
5500 AH Veldhoven (NL)

(54) **DETECTOR FOR DETECTING RADIATION, METHOD OF DETECTING RADIATION, ASSESSMENT SYSTEM**

(57) Detectors and methods of detecting radiation are disclosed. In one arrangement, a plurality of pixel elements is provided. The pixel elements comprise respective pixel substrates, collection electrodes and readout circuits. The pixel substrates are configured such that impingement of target radiation on the pixel substrates generates charge carriers in the pixel substrates. The readout circuits are configured to provide an output responsive to collection of the charge carriers by the respective collection electrodes. A control system implements a plurality of selectable resolution modes by controlling potentials applied to control electrodes and the collection electrodes to define a corresponding plurality of mappings between the pixel substrates in which charge carriers are generated and the collection electrodes that collect those charge carriers.

Fig. 9

**Description**

FIELD

The present disclosure relates to detectors and methods for detecting radiation, as well as to an assessment system.

BACKGROUND

When manufacturing semiconductor integrated circuit (IC) chips, undesired pattern defects, as a consequence of, for example, optical effects and incidental particles, inevitably occur on a substrate (i.e. wafer) or a mask during the fabrication processes, thereby reducing the yield. Monitoring the extent of the undesired pattern defects is therefore an important process in the manufacture of IC chips. More generally, the assessment for example inspection and/or measurement of a surface of a substrate, or other object/material, is an important process during and/or after its manufacture.

Assessment tools, which herein are referred to as assessment systems, are known that use a charged particle beam to assess objects, which may be referred to as samples or substrates, for example to detect pattern defects. Various systems for making such measurements are known, including scanning electron microscopes (SEMs), which are often used to measure critical dimension (CD), and specialized tools to measure overlay, the accuracy of alignment of two layers in a device.

In a SEM, a primary electron beam of electrons at a relatively high energy is targeted with a final deceleration step to land on a sample at a relatively low landing energy. The beam of electrons is focused as a probing spot on the sample. The interactions between the material structure at the probing spot and the landing electrons from the beam of electrons cause signal electrons to be emitted from the surface, such as secondary electrons, backscattered electrons or Auger electrons. The signal electrons may be emitted from the material structure of the sample. By scanning the primary electron beam as the probing spot over the sample surface, signal electrons can be emitted across the surface of the sample. By collecting these emitted signal electrons from the sample surface, a pattern inspection system may obtain an image representing characteristics of the material structure of the surface of the sample.

Various forms of scatterometers have been developed for use in the lithographic field. These devices direct a beam of radiation onto a target and measure one or more properties of the scattered radiation - e.g., intensity at a single angle of reflection as a function of wavelength; intensity at one or more wavelengths as a function of reflected angle; or polarization as a function of reflected angle - to obtain a diffraction "spectrum" from which a property of interest of the target can be determined.

Assessment systems apply a range of different types of radiation to samples and detect signal radiation from the samples. The signal radiation may comprise particles (e.g., charged particles such as electrons) or electromagnetic radiation. The signal radiation is detected by a detector, which needs to be adapted to the nature of the signal radiation and/or to different desired modes of detection. For example, it may be desirable to controllably vary one or more parameters of the detection such as a sensitivity or spatial resolution of the detection.

A known approach for varying the resolution of a detector to provide multi-resolution capability is to controllably group pixels of the detector. For example, a detector may be configured to provide a highest resolution mode by allowing each pixel to independently detect impingement of radiation on the pixel and one or more lower resolution modes in which pixels are grouped together to form superpixels with pixels in each superpixel contributing indistinguishably to a single output from the superpixel. Grouping of pixels in this manner may be referred to as binning.

A detector may be configured such that radiation impinging on the detector generates charge carriers (e.g., electrons or holes) in pixels. Pixel binning can be implemented in such arrangements by summing charge generated in multiple pixels using a single common capacitor. Variations in gain may be provided by varying the capacitance of the common capacitor. For example, a high gain mode can be provided using a lower capacitance (such that a voltage across the capacitor increases more steeply as a function of charge imbalance across the capacitor) and a low gain mode can be provided using a higher capacitance. Known arrangements of this type consume relatively large amounts of power and/or provide relatively poor performance (e.g., low detection efficiency and/or high noise), particular in modes that involve binning of more than about 2 or 4 pixels. The high power consumption may result for example from a need for all pixels to contribute actively to the detection process even when binned into superpixels. A lower overall charge to voltage conversion gain may arise due to increased parasitic capacitance. Some approaches involve allowing charge collecting elements of selected pixels to float during the pixel binning to redirect charges to neighboring pixels, but this may lead to longer charge collection times due to insufficient electric field strengths, which may lead to decreased collection efficiency.

Pixel binning may also be implemented by summing voltages from groups of pixels, but this will involve addition of amplifier noise, which increases noise. Furthermore, all participating pixels need to be active, which increases power consumption. Furthermore, it is difficult to provide binning flexibility in such systems because this leads to complex signal routing requirements.

Drift detectors are known that create a single low capacitance pixel. An array of such detectors can be provided but it is difficult to provide multi-resolution capabilities.

## SUMMARY

It is an object of the present disclosure to provide improved detectors and methods for detecting radiation that at least partially address one or more of the shortcomings mentioned above and/or which provide other advantages.

According to an aspect of the invention, there is provided a detector for detecting radiation, comprising: a plurality of pixel elements comprising respective pixel substrates, collection electrodes and readout circuits, wherein the pixel substrates are configured such that impingement of target radiation on the pixel substrates generates charge carriers in the pixel substrates, and the readout circuits are configured to provide an output responsive to collection of the charge carriers by the respective collection electrodes; a plurality of control electrodes; and a control system configured to implement a plurality of selectable resolution modes by controlling potentials applied to the control electrodes and the collection electrodes to define a corresponding plurality of mappings between the pixel substrates in which charge carriers are generated and the collection electrodes that collect those charge carriers.

According to an aspect of the invention, there is provided a method of detecting radiation, comprising: applying potentials to control electrodes and to collection electrodes in a plurality of pixel elements comprising respective pixel substrates, collection electrodes and readout circuits, wherein: impingement of target radiation on the pixel substrates generates charge carriers in the pixel substrates, the readout circuits provide outputs responsive to collection of charge carriers by the respective collection electrodes, and the method detects radiation in a plurality of resolution modes, each resolution mode being defined by controlling the potentials applied to the control electrodes and collection electrodes to define a respective mapping between the pixel substrates in which charge carriers are generated and the collection electrodes that collect those charge carriers.

## BRIEF DESCRIPTION OF FIGURES

The above and other aspects of the present disclosure will become more apparent from the description of exemplary embodiments, taken in conjunction with the accompanying drawings.

FIG. 1 is a schematic diagram illustrating an exemplary charged particle beam inspection apparatus.
FIG. 2 is a schematic diagram illustrating an exemplary multi-beam apparatus that is part of the exemplary charged particle beam inspection apparatus of FIG. 1.
FIG. 3 is a schematic diagram of an exemplary electron-optical column comprising a condenser lens array, an objective lens array and a detector array.
FIG. 4 is a schematic cross-sectional view of a portion of an objective lens array and detector array of an exemplary arrangement.
FIG. 5 is bottom view of the portion of the detector array of FIG. 4.
FIG. 6 is a bottom view of a modified version of the portion of the objective lens array of FIG. 4.
FIG. 7 is a schematic diagram of an exemplary electron-optical device comprising an objective lens array and a beam separator.
FIG. 8(a)-(b) shows (a) a schematic diagram of a dark field scatterometer for use in measuring targets using a first pair of illumination apertures and (b) a detail of a diffraction spectrum of a target grating for a given direction of illumination.
FIG. 9 is a schematic side sectional view relative to plane A-A' of a detector for detecting radiation in FIG. 10;
FIG. 10 is a schematic top view showing pixel elements of the detector of FIG. 10 controlled to be in a high resolution mode.
FIG. 11 is a schematic top view showing the pixel elements of FIG. 10 controlled to operate as a superpixel in a low resolution mode.
FIG. 12 depicts pixel elements controlled to operate as a larger superpixel with control electrodes providing intermediate equipotentials.
FIG. 13 is graph schematically depicting variation of potential along the broken line B-B' in FIG. 13.
FIG. 14 depicts pixel elements controlled to operate as a larger superpixel with control electrodes providing intermediate equipotentials and multiple active collection electrodes to increase a full well capacity.
FIG. 15 is a schematic diagram showing example routing of voltage lines to control electrodes defining three superpixels.
FIG. 16 is a schematic diagram showing how diodes arranged in series can be used to control voltages applied to control electrodes.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The enhanced computing power of electronic devices, which reduces the physical size of the devices, can be accomplished by significantly increasing the packing density of circuit components such as transistors, capacitors, diodes, etc. on an IC chip. This has been enabled by increased resolution enabling yet smaller structures to be made. For example, an IC chip of a smart phone, which is the size of a thumbnail and available in, or earlier than, 2019, may include over 2 billion transistors, the size of each transistor being less than $1/1000^{th}$ of a human hair. Thus, it is not surprising that semiconductor IC manufacturing is a complex and time-consuming process, with hundreds of individual steps. Errors in even one step have the potential to dramatically affect the functioning of the final product. Even a single defect can cause device failure in certain situations. The goal of the manufacturing process is to improve the overall yield of the process. For example, to obtain a 75% yield for a 50-step process (where a step can indicate the number of layers formed on a wafer), each individual step must have a yield greater than 99.4%. If each individual step had a yield of 95%, the overall process yield would be as low as 7%.

While high process yield is desirable in an IC chip manufacturing facility, maintaining a high substrate (i.e. wafer) throughput, defined as the number of substrates processed per hour, is also essential. High process yield and high substrate throughput can be impacted by the presence of a defect. This is especially true if operator intervention is required for reviewing the defects. Thus, high throughput detection and identification of micro and nano-scale defects by inspection systems (such as a Scanning Electron Microscope ('SEM')) is essential for maintaining high yield and low cost.

A SEM comprises a scanning device and a detector apparatus. The scanning device comprises an illumination apparatus that comprises an electron source, for generating primary electrons, and a projection apparatus for scanning a sample, such as a substrate, with one or more focused beams of primary electrons. Together at least the illumination apparatus, or illumination system, and the projection apparatus, or projection system, may be referred to together as the electron-optical device or column. The primary electrons interact with the sample and generate secondary electrons. The detection apparatus captures the secondary electrons from the sample as the sample is scanned so that the SEM can create an image of the scanned area of the sample. For high throughput inspection, some of the inspection apparatuses use multiple focused beams, i.e. a multi-beam, of primary electrons. The component beams of the multi-beam may be referred to as sub-beams or beamlets. A multi-beam can scan different parts of a sample simultaneously. A multi-beam inspection apparatus can therefore inspect a sample at a much higher speed than a single-beam inspection apparatus.

An implementation of a known multi-beam inspection apparatus is described below.

The figures are schematic. Relative dimensions of components in drawings are therefore exaggerated for clarity. Within the following description of drawings the same or like reference numbers refer to the same or like components or entities, and only the differences with respect to the individual embodiments are described. While the description and drawings are directed to an electron-optical apparatus, it is appreciated that the embodiments are not used to limit the present disclosure to specific charged particles. References to electrons throughout the present document may therefore be more generally be considered to be references to charged particles, with the charged particles not necessarily being electrons.

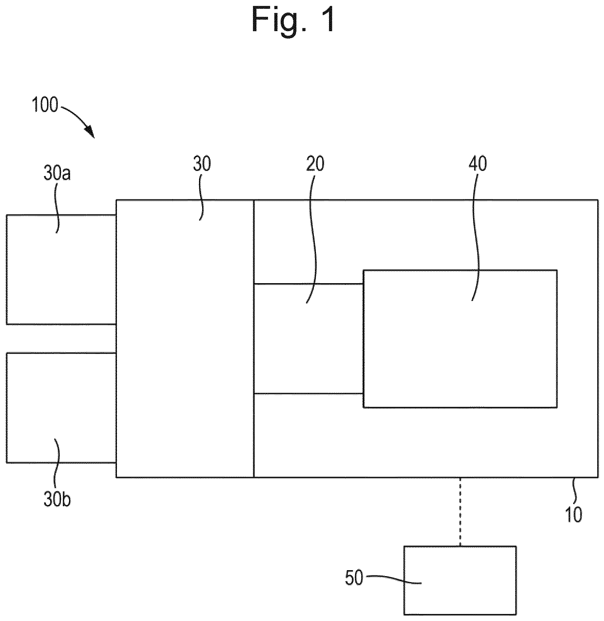

Reference is now made to **FIG. 1**, which is a schematic diagram illustrating an exemplary charged particle beam inspection apparatus 100, which may also be referred to as a charged particle beam assessment system or simply assessment system. The charged particle beam inspection apparatus 100 of **FIG. 1** includes a main chamber 10, a load lock chamber 20, an electron beam apparatus 40, an equipment front end module (EFEM) 30 and a controller 50. The controller may be distributed between different components of the assessment system, including for example in the electron beam apparatus 40. Electron beam apparatus 40 is located within main chamber 10.

EFEM 30 includes a first loading port 30a and a second loading port 30b. EFEM 30 may include additional loading port(s). First loading port 30a and second loading port 30b may, for example, receive substrate front opening unified pods (FOUPs) that contain substrates (e.g., semiconductor substrates or substrates made of other material(s)) or samples to be inspected (substrates, wafers and samples are collectively referred to as "samples" hereafter). One or more robot arms (not shown) in EFEM 30 transport the samples to load lock chamber 20.

Load lock chamber 20 is used to remove the gas around a sample. This creates a vacuum that is a local gas pressure lower than the pressure in the surrounding environment. The load lock chamber 20 may be connected to a load lock vacuum pump system (not shown), which removes gas particles in the load lock chamber 20. The operation of the load lock vacuum pump system enables the load lock chamber to reach a first pressure below the atmospheric pressure. After reaching the first pressure, one or more robot arms (not shown) transport the sample from load lock chamber 20 to main chamber 10. Main chamber 10 is connected to a main chamber vacuum pump system (not shown). The main chamber vacuum pump system removes gas particles in main chamber 10 so that the pressure in around the sample reaches a second pressure lower than the first pressure. After reaching the second pressure, the sample is transported to the electron beam apparatus by which it may be inspected. An electron beam apparatus 40 may comprise a multi-beam electron-optical apparatus.

Controller 50 is signally, for example electronically, connected to electron beam apparatus 40, for example as distributed components of the controller 50. Controller 50 may be a processor (such as a computer) configured to control the charged particle beam inspection apparatus 100. Controller 50 may also include a processing circuitry configured to execute various signal and image processing functions. While controller 50 is shown in **FIG. 1** as being outside of the structure that includes main chamber 10, load lock chamber 20, and EFEM 30, it is appreciated that controller 50 may be part of the structure. The controller 50 may be located in one of the component elements of the charged particle beam inspection apparatus or it can be distributed over at least two of the component elements. While the present disclosure provides examples of main chamber 10 housing an electron beam inspection apparatus, it should be noted that aspects of the disclosure in their broadest sense are not limited to a chamber housing an electron beam inspection apparatus. Rather, it is appreciated that the foregoing principles may also be applied to other systems and other arrangements of apparatus, that operate under the second pressure.

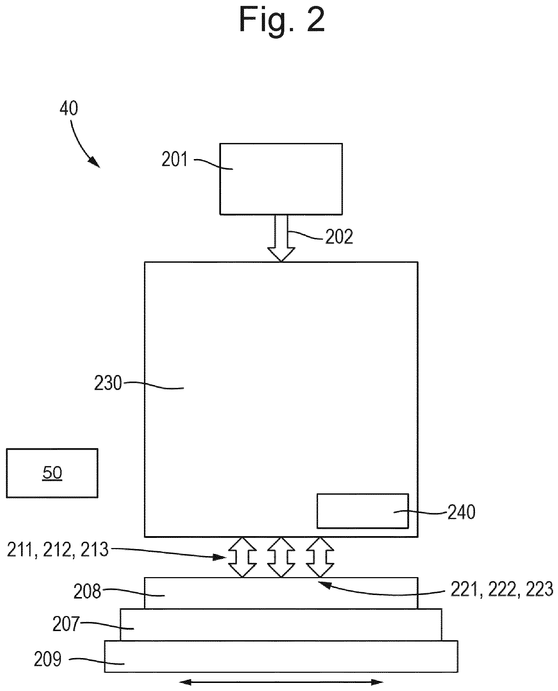

Reference is now made to **FIG. 2**, which is a schematic diagram illustrating an exemplary charged particle beam assessment apparatus 40. The electron beam apparatus 40 may be provided as part of the exemplary charged particle beam inspection system 100 of **FIG. 1**. The electron beam apparatus 40 includes an electron source 201 and a charged particle column (or device) 230. The charged particle device 230 may be referred to or comprise a projection apparatus for directing a primary charged particle beam 202 towards a sample 208. The electron source 201 and associated and component charged particle optical elements may be referred to as an illumination apparatus for generating a primary charged particle beam 202. The assessment apparatus comprises a sample support that supports a sample 208. The sample support in this example comprises a sample holder 207. The sample holder 207 holds the sample 208 (e.g., a substrate or a mask) for assessment. The sample holder 207 is supported by a motorized or actuated stage 209. The electron beam apparatus 40 further comprises a detector 240. The detector 240 detects signal charged particles (e.g., electrons) from the sample 208. The detector 240 generates detection signals on detection of the signal charged particles.

The electron source 201 may comprise a cathode (not shown) and an extractor or anode (not shown). During operation, electron source 201 is configured to emit electrons as primary electrons from the cathode. The primary electrons are extracted or accelerated by the extractor and/or the anode to form the primary electron beam 202.

The charged particle device 230 is configured to convert primary electron beam 202 into a plurality of charged particle beams 211, 212, 213 and to direct each beam onto the sample 208. Although three beams are illustrated for simplicity, there may be many tens, many hundreds, many thousands, many tens of thousands, or even hundreds of thousands (or more) of beams. The beams may be referred to as beamlets or sub-beams. The plurality of charged particle beams may be referred to collectively as a multi-beam or beam grid. A beam grid with so many beams (e.g. more than a thousand beams) may have a field of view of e.g. more than 0.5mm, for example in the range of 0.5 to 30mm or 1 to 30 mm, for example in the range of 0.5 to 15mm

The controller 50 (for example control system comprising distributed controllers) may be connected to various parts of charged particle beam inspection apparatus 100 of **FIG. 1**, such as the electron source 201, the electron detection device 240, the charged particle device 230, and actuated stage 209. The controller 50 may perform various image and signal processing functions. The controller 50 may also generate various control signals to govern operations of the charged particle beam inspection apparatus 100, including operations of the electron beam apparatus 40.

The charged particle device 230 may be configured to focus, for example, beams 211, 212, and 213 onto a sample 208 for inspection and may form three probe spots 221, 222, and 223 on the surface of sample 208. The charged particle device 230 may be configured to deflect primary beams 211, 212, and 213 to scan probe spots 221, 222, and 223 across individual scanning areas in a section of the surface of sample 208. In response to incidence of primary beams 211, 212, and 213 on probe spots 221, 222, and 223 on sample 208, electrons are generated from the sample 208 which include secondary electrons and backscattered electrons which may be referred to as signal charged particles. The secondary electrons typically have electron energy as large as fifty electron volts ($\leq 50$ eV) and backscattered electrons typically have electron energy between fifty electron volts (50 eV) and the landing energy of primary beams 211, 212, and 213.

The detector 240 may send the detection signals generated in the detector 240, for example as an imaging or detection signal, to the controller 50 or a signal processing system (not shown which may be part of the controller 50), e.g. to construct images of the corresponding scanned areas of sample 208. The detector 240 may be incorporated at least partly into the charged particle device 230 or may be separate therefrom, for example where a secondary optical column directs secondary electrons to the detector 240.

The controller 50 may comprise an image processing system that includes an image acquirer (not shown) and a storage device (not shown). For example, the controller may comprise a processor, computer, server, mainframe host, terminals, personal computer, any kind of mobile computing devices, and the like, or a combination thereof. The image acquirer may comprise at least part of the processing function of the controller. Thus the image acquirer may comprise at least one or more processors. The image acquirer may be communicatively coupled to the detector 240 permitting signal communication, such as an electrical conductor, optical fiber cable, portable storage media, IR, Bluetooth, internet, wireless network, wireless radio, among others, or a combination thereof. The image acquirer may receive the detection signal from the detector 240, may process the data comprised in the signal and may construct an image therefrom. The image acquirer may thus acquire images of sample 208. The image acquirer may also perform various post-processing functions, such as generating contours, superimposing indicators on an acquired image, and the like. The image acquirer may be configured to perform adjustments of brightness and contrast, etc. of acquired images. The storage may be a storage medium such as a hard disk, flash drive, cloud storage, random access memory (RAM), other types of computer readable memory, and the like. The storage may be coupled with the image acquirer and may be used for saving scanned raw image data as original images, and post-processed images.

The image acquirer may acquire one or more images of a sample 208 based on an imaging signal received from the detector 240. An imaging signal may correspond to a scanning operation for conducting charged particle imaging. An acquired image may be a single image comprising a plurality of imaging areas. The single image may be stored in the storage. The single image may be an original image that may be divided into a plurality of regions. Each of the regions may comprise one imaging area containing a feature of sample 208. The acquired images may comprise multiple images of a single imaging area of sample 208 sampled multiple times over a time period. The multiple images may be stored in the storage. The controller 50 may be configured to perform image processing steps with the multiple images of the same location of sample 208.

The controller 50 may include measurement circuitry (e.g., analog-to-digital converters) to obtain a distribution of the detected secondary electrons. A part of the controller for such a function may be comprised in or proximate to the detector. The electron distribution data, collected during a detection time window, can be used in combination with corresponding scan path data of each of primary beams 211, 212, and 213 incident on the sample surface to reconstruct images of the sample structures under inspection. The reconstructed images can be used to reveal various features of the internal or external structures of sample 208. The reconstructed images can thereby be used to reveal any defects that may exist in and/or on, thus of the sample.

The controller 50 may control actuated stage 209 to move sample 208 during inspection of sample 208, for example to provide a scanning motion of the stage relative to the paths of the primary beams. The controller 50 may enable actuated stage 209 to move sample 208 in a direction such as part of the scanning motion of the stage, preferably continuously, for example at a constant speed, at least during sample inspection. The controller 50 may control movement of the actuated stage 209 so that it changes the speed of the movement of the sample 208 dependent on various parameters. For example, the controller may control the stage speed (including its direction) depending on the characteristics of the inspection steps and/or scans of the scanning process for example as disclosed in EPA 21171877.0 filed 3 May 2021 which is hereby incorporated by reference in so far as the combined stepping and scanning strategy at least of the stage. In controlling the actuated stage, actuation of the stage and thus the sample may enable the sample to be positioned, for example dynamically, relative to the paths of the primary beams.

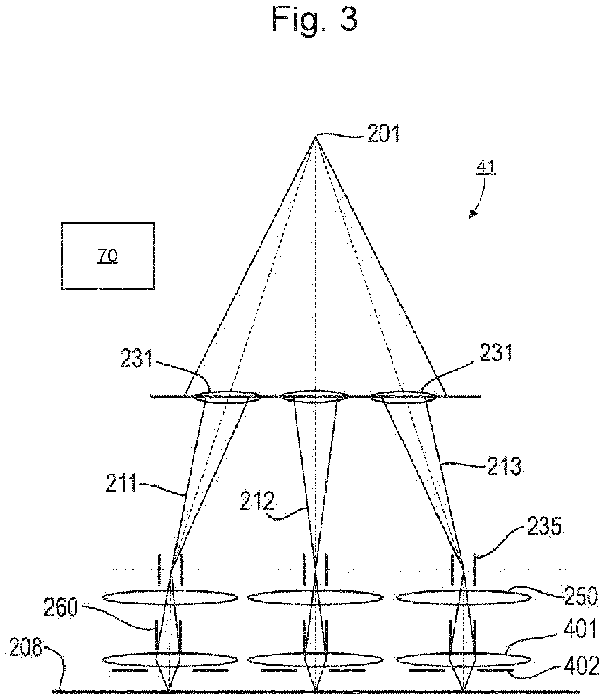

**FIG. 3** is a schematic diagram of an exemplary charged particle device 41 for use in an assessment apparatus. For ease of illustration, lens arrays are depicted schematically herein by arrays of oval shapes. Each oval shape represents one of the lenses in the lens array. The oval shape is used by convention to represent a lens, by analogy to the biconvex form often adopted in optical lenses. In the context of charged particle devices such as those discussed herein, it will be understood that lens arrays will typically operate electrostatically and so may not require any physical elements adopting a biconvex shape. As described below, lens arrays may instead comprise multiple plates with apertures. Each plate with apertures may be referred to as an electrode. The electrodes may be provided in series along a path of a beam grid of a plurality of charged particle beams (which may also be referred to as sub-beams). The electrodes are thus also in series along paths of charged particle beams of the beam grid.

Electron source 201 directs electrons toward an array of condenser lenses 231 forming part of charged particle device 230. The electron source 201 is desirably a high brightness thermal field emitter with a good compromise between brightness and total emission current. There may be many tens, many hundreds or many thousands or even tens of thousands of condenser lenses 231. Condenser lenses of array 231 may comprise multi-electrode lenses and have a construction based on EP1602121A1, which document is hereby incorporated by reference in particular to the disclosure of a lens array to split an e-beam into a plurality of sub-beams, with the array providing a lens for each sub-beam. The condenser lens array may take the form of at least two, preferably three, plates, acting as electrodes, with apertures in each plate aligned with apertures in other plates to define paths for charged particle beams through the plates. At least two of the plates are maintained during operation at different potentials to achieve the desired lensing effect. Between the plates of the condenser lens array are electrically insulating plates, for example made of an insulating material such as ceramic or glass, with one or more apertures for the charged particle beams. Additionally or alternatively, one or more of the plates may feature apertures that each have their own electrode, for example with an array of electrodes around their perimeter or arranged in groups of apertures having a common electrode. In a variant, one or more of the plates may comprise multiple portions or strips with multiple apertures. In a further alternative arrangement, a macro collimator is provided instead of the condenser lens array. The macro collimator may act on the beam from the source 201 before the beam has been split into a multi-beam. The macro collimator may be implemented magnetically, electrostatically, or magnetically and electrostatically.

In some embodiments, the condenser lens array is formed of three plate arrays in which charged particles have the same energy as they enter and leave each lens, which arrangement may be referred to as an Einzel lens. Thus, dispersion only occurs within the Einzel lens itself (between entry and exit electrodes of the lens), thereby limiting off-axis chromatic aberrations. When the thickness of the condenser lenses is low, e.g. a few mm, such aberrations have a small or negligible effect.

Each condenser lens in the array directs electrons into a respective beam 211, 212, 213 which is focused at a respective intermediate focus 233. A collimator or an array of collimators may be positioned to operate on the respective intermediate focuses 233. The collimators may take the form of deflectors 235 provided at the intermediate focuses 233. Deflectors 235 are configured to bend a respective beam 211, 212, 213 by an amount effective to ensure that the principal ray (which may also be referred to as the beam axis) is incident on the sample 208 substantially normally (i.e. at substantially 90° to the nominal surface of the sample). Note that in an arrangement with a macro condenser lens, the condenser lens may collimate or contribute to the collimation of the source beam or, in an embodiment, a plurality of beams.

An objective lens array 401 is provided down-beam from the deflectors 235. The objective lens array 501 comprises an objective lens for each beam 211, 212, 213. The objective lens array 401 projects the beams 211, 212, 213 onto the sample 208. The objective lens array 401 may comprise two or more, preferably at least three, plate electrode arrays connected to respective potential sources.

Optionally, a control lens array 250 is provided between the deflectors 235 and the objective lens array 401. The control lens array 250 comprises a control lens for each beam 211, 212, 213. The control lens array 250 provides additional degrees of freedom for controlling properties of the beams 211, 212, 213. The control lens array 250 may comprise two or more, preferably at least three, plate electrode arrays connected to respective potential sources. A function of control lens array 250 is to optimize the beam opening angle with respect to the demagnification of the beam and/or to control the beam energy delivered to the objective lenses, each of which directs a respective beam 211, 212, 213 onto the sample 208. In an embodiment the control lens array may be considered to be part of the objective lens, for example in being additional plates associated with the objective lens array.

Optionally an array of scan deflectors 260 is provided between the control lens array 250 and the objective lens array 401. The array of scan deflectors 260 comprises a scan deflector for each beam 211, 212, 213.

Each scan deflector is configured to deflect a respective beam 211, 212, 213 in one or two directions to scan the beam across the sample 208 in one or two directions. Alternatively, a macro scan deflector may be provided to scan the charged particle beams over the sample 208. The macro scan deflector may be provided up-beam of the control lens array 250. In an embodiment such a macro scan deflector may operate on the source beam and may be present with a macro condenser lens.

A detector module 402 of a detector is provided within the objective lenses or between the objective lenses and the sample 208 to detect signal electrons/particles from the sample 208. An exemplary construction of such a detector module 402 is described below. Note that the detector additionally or alternatively may have detector elements up-beam along the primary beam path of the objective lens array 401 or even the control lens array 250. The detector module may be an array of detector elements (e.g. a detector array). Each element may be associated with an individual beam, for example positioned to detect signal particles generated by the individual beam.

The charged particle device 41 of **FIG. 3** may be configured to control the landing energy of electrons on the sample 208 by varying potentials applied to the electrodes of the control lenses and the objective lenses. The control lenses and objective lenses work together and may be referred to as an objective lens assembly. The landing energy can be selected to increase emission and detection of secondary electrons dependent on the nature of the sample being assessed. The detector module may be comprised in the objective lens assembly.

The objective lenses can be configured to demagnify the electron beam by a factor greater than 10, desirably in the range of 50 to 100 or more. The objective lenses may comprise three electrodes: a middle electrode, a lower electrode and an upper electrode. The upper electrode may be omitted. An objective lens having only two electrodes can have lower aberration than an objective lens having more electrodes. A three-electrode objective lens can have greater potential differences between the electrodes and so enable a stronger lens. Additional electrodes (i.e. more than two electrodes) provide additional degrees of freedom for controlling the electron trajectories, e.g. to focus secondary electrons as well as the incident beams.

In some embodiments, the objective lens array assembly comprises a detector having a detector module 402 down-beam of at least one electrode of the objective lens array 401. The detector module 402 may comprise or even take the form of a detector array. In an embodiment, at least a portion of the detector is adjacent to and/or integrated with the objective lens array 401. For example, the detector module 402 may be implemented by integrating a CMOS chip detector into a bottom electrode of the objective lens array 401. Integration of a detector module 402 into the objective lens array may replace a secondary column. The CMOS chip is preferably orientated to face the sample (because of the small distance between sample and the bottom of the electronoptical system, which may for example be in the range of 10 to 400 micron, desirably in the range of 50 to 200 micron, optionally about 100 micron). It is noted that even in situations in which the detector is up-beam of the most down-beam electron-optical element of the charged particle device, there may be a close, e.g. of similar distance, separation between the most down-beam electron-optical element and the sample (e.g. about 100 micron). In an embodiment, electrodes to capture the signal charged particles are formed in the top metal layer of the CMOS device. The electrodes can be formed in other layers of the substrate, e.g. of the CMOS chip. Power and control signals of the CMOS may be connected to the CMOS by through-silicon vias. For robustness, preferably the bottom electrode consists of two elements: the CMOS chip and a passive Si plate with holes. The plate shields the CMOS from high E-fields.

In an embodiment, a single electrode surrounds at least some of the apertures. In an arrangement a single electrode is assigned for example around each aperture. In another embodiment, a plurality of electrode elements are provided around each aperture for example as a detector element. The signal charged particles captured by the electrode elements surrounding one aperture may be combined into a single detection signal or used to generate independent detection signals. The electrode elements may be divided radially (i.e., to form a plurality of concentric annuluses), angularly (i.e., to form a plurality of sector-like pieces), both radially and angularly (providing an arrangement like a dart board), or in a grid (for example as a chess board) or in any other convenient manner.

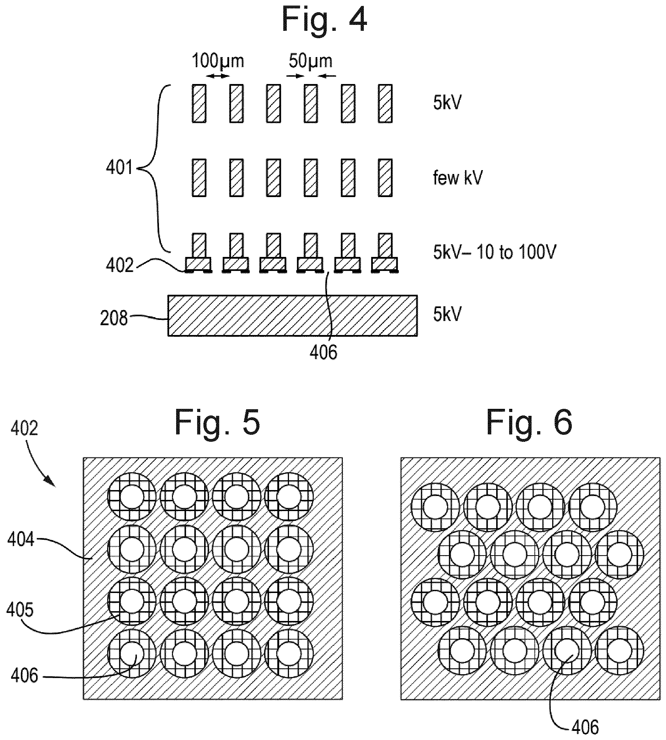

An exemplary embodiment of a detector integrated into an objective lens array 401 is shown in **FIG. 4**, which illustrates a portion of an objective lens array 401 in schematic cross section. In this embodiment, the detector comprises a detector module 402 comprising a plurality (e.g., an array) of detector elements 405 (e.g., sensor elements such as capture electrodes) preferably as an array of detector elements (i.e. a plurality of detector elements in a pattern or arrangement preferably over a two dimensional surface). In this embodiment, the detector module 402 is provided on an output side of the objective lens array. The output side is the output side of the objective lens array 401. **FIG. 5** is a bottom view of detector module 402 which comprises a substrate 404 on which are provided a plurality of detector elements (or capture electrodes 405) each surrounding a beam aperture 406. The beam apertures 406 may be formed by etching through substrate 404. In the arrangement shown in **FIG. 5**, the beam apertures 406 are shown in a rectangular array. The beam apertures 406 can also be differently arranged, e.g. in a hexagonal close packed array as depicted in **FIG. 6**.

The integrated detector module 402 described above is particularly advantageous when used with an assessment apparatus (e.g. comprising a device) having tunable landing energy because secondary electron capture can be optimized for a range of landing energies. A detector module having or in the form of an array can also be integrated into other electrode arrays, not only the lowest electrode array. Further details and alternative arrangements of a detector module integrated into an objective lens can be found in EP Application Number 20184160.8, which document is hereby incorporated by reference.

An electric power source may be provided to apply respective potentials to electrodes of the control lenses of the control lens array 250 and the objective lenses of the objective lens array 401 and the condenser lenses of the condenser lens array or any electron-optical component of the charged particle device 41 for example the detector module (such as when integrated into the objective lens array or when the objective lens and detector module are separate components). A controller 50 may control the potentials applied to the electron-optical components such as the electrodes of the condenser lens array, objective lens array and/or control lens array.

The charged particle device 41 may comprise other electron-optical components such as charged particle correctors, for example as corrector arrays for alignment of the source to the sample and between beams of the multi-beam and for adjusting the focus of different groups of the beam grid, or individual beams of the beam grid. Such correctors may be controlled to operate dynamically and/or statically, for example during step-up, servicing or during calibration of the charged particle device 41.

In an embodiment, an array of charged particle devices (or device array) is provided. The array may comprise a plurality of any of the charged particle devices (e.g., electron-optical columns) described herein. Each of the charged particle devices in the array focuses respective pluralities of charged particle beams onto different regions of the same sample 208. Each charged particle device in the array may derive a respective plurality of charged particle beams from a different respective source 201. Each respective source 201 may be one source in a plurality of sources 201. At least a subset of the plurality of sources 201 may be provided as a source array. The source array may comprise a plurality of emitters on a common substrate. The focusing of pluralities of charged particle beams from different charged particle devices simultaneously onto different regions of the same sample allows an increased area of the sample 208 to be exposed to charged particle beams simultaneously. Therefore, an increased area of the sample may be processed (e.g. assessed) at one time. The charged particle devices in the device array may be arranged adjacent to each other so as to project the respective pluralities of beams onto adjacent regions of the sample 208. Any number of charged particle devices may be used in the array. Preferably, the number of charged particle devices is in the range of 9 to 200. Each charged particle device in the array may be configured in any of the ways described herein when referring to a single charged particle device, electron-optical device or system or column. Alternatively or additionally, one or more of the charged particle device in the array may be configured to project a single beam.

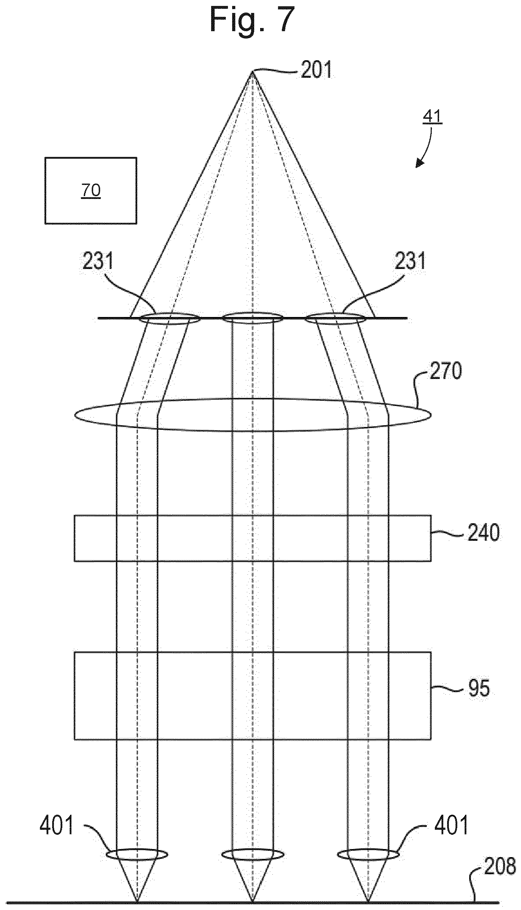

FIG. 7 schematically depicts a further example of a charged particle device 41. Features that are the same as those described above are given the same reference numerals. For conciseness, such features are not described in detail with reference to FIG. 7. For example, the source 201, the condenser lenses 231, the objective lens array 401 and the sample 208 (e.g., on a sample support 207) may be as described above. In this example, a macro collimator 270 is provided instead of a deflector array of the type described above with reference to FIG. 3. Such a macro collimator may be a macro lens that may be magnetic, electrostatic or both. In other embodiments, a deflector array may be used to at least contribute to the collimation of the beams, so the deflector array is for finer deflection towards collimation than the action of the macro collimator 270. Such an arrangement may also comprise an array of multiple deflectors (for example in which each aperture has multiple electrodes) for even finer collimation. In an arrangement the condenser lenses 231 may comprise a single plate defining a beam limiting aperture array in which are defined a plurality of apertures with one or more associated macro electrodes with a single aperture. Such a beam limiting aperture array and an associated macro electrode may also form a condenser lens array to focus the generated beams in an intermediate focus which desirably corresponds to the position of the collimator 270.

As described above, in some embodiments a detector may be provided between the objective lens array 401 and the sample 208. The detector may face the sample 208. Alternatively, as shown in FIG. 7, the detector 240 may be implemented such that the objective lens array 401 is between the detector 240 and the sample 208.

In an embodiment a deflector array 95 is provided between the detector 240 and the objective lens array 401. In an embodiment the deflector array 95 comprises a Wien filter array so that deflector array 95 may be referred to as a beam separator. The deflector array 95 is configured to provide a magnetic field and an electrostatic filed. The electrostatic and magnetic fields operate together to separate the charged particles projected to the sample 208 relative to the signal particles e.g. electrons from the sample 208. The operation of the fields directs the signal particles towards the detector 240.

In an embodiment the detector 240 is configured to detect signal particles by reference to the energy of the charged particle, i.e. dependent on a band gap, such a semiconductor based type of detector. Such a detector 240 may be called an indirect current detector. The secondary electrons emitted from the sample 208 gain energy from the fields between the electrodes. The secondary electrons have sufficient energy once they reach the detector 240. In a different arrangement the detector 240 may be an electron to photon converter such as a scintillator array, for example of fluorescing strip between the beams that are positioned up beam along the primary beam path with respect to the Wien filter. Primary beams passing through the Wien filter array (of magnetic and electrostatic strips orthogonal to the primary beam path) have paths upbeam and downbeam of the Wien filter array that are substantially parallel, whereas signal electrons from the sample are directed by the Wien filter array towards the scintillator array. The electron to photon converter may be photonically coupled to a photon to electron converter to convert any photons generated in and emitted by the electron to photon converter. The photon to electron converter may be electrically connected to electronic circuitry to process a detection signal. In different embodiments the photon to electron converter may be within or external to the charged particle device. In an embodiment photon coupling may be by via a photon transport unit (e.g., an array of optical fibers) to a remote optical detector which generates a detection signal on detection of a photon.

A metrology apparatus, which may also be referred to as an optical measurement system, usable in association with embodiments of the present disclosure is shown in FIG. 3(a). An alternative metrology apparatus may use EUV radiation such as, for example, that disclosed in WO2017/186483A1. A target structure T and diffracted rays of measurement radiation used to illuminate the target structure are illustrated in more detail in Figure 3(b). The metrology apparatus illustrated is of a type known as a dark field metrology apparatus. The metrology apparatus may be a stand-alone device or incorporated in either a lithographic apparatus, e.g., at a measurement station, or a lithographic cell. An optical axis, which has several branches throughout the apparatus, is represented by a dotted line O. In this apparatus, light emitted by source 11 (e.g., a xenon lamp) is directed onto substrate W via a beam splitter 15 by an optical system comprising lenses 12, 14 and objective lens 16. These lenses are arranged in a double sequence of a 4F arrangement. A different lens arrangement can be used, provided that it still provides a substrate image onto a detector, and simultaneously allows for access of an intermediate pupil-plane for spatial-frequency filtering. Therefore, the angular range at which the radiation is incident on the substrate can be selected by defining a spatial intensity distribution in a plane that presents the spatial spectrum of the substrate plane, here referred to as a (conjugate) pupil plane. In particular, this can be done by inserting an aperture plate 13 (or 13') of suitable form between lenses 12 and 14, in a plane which is a back-projected image of the objective lens pupil plane. In the example shown, lens 12 is implemented as a lens group comprising lenses 12a-12c. In the example illustrated, aperture plate 13 has different forms, labeled 13N and 13S, allowing different illumination modes to be selected. The illumination system in the present examples forms an off-axis illumination mode. In the first illumination mode, aperture plate 13N provides off-axis from a direction designated, for the sake of description only, as 'north'. In a second illumination mode, aperture plate 13S is used to provide similar illumination, but from an opposite direction, labeled 'south'. Other modes of illumination are possible by using different apertures. The rest of the pupil plane is desirably dark as any unnecessary light outside the desired illumination mode will interfere with the desired measurement signals.

As shown in Figure 3(b), target structure T is placed with substrate W normal to the optical axis O of objective lens 16. The substrate W may be supported by a support (not shown). A ray of measurement radiation I impinging on target structure T from an angle off the axis O gives rise to a zeroth order ray (solid line 0) and two first order rays (dot-chain line +1 and double dot-chain line -1). It should be remembered that with an overfilled small target structure, these rays are just one of many parallel rays covering the area of the substrate including metrology target structure T and other features. Since the aperture in plate 13 has a finite width (necessary to admit a useful quantity of light), the incident rays I will in fact occupy a range of angles, and the diffracted rays 0 and +1/-1 will be spread out somewhat. According to the point spread function of a small target, each order +1 and - 1 will be further spread over a range of angles, not a single ideal ray as shown. Note that the grating pitches of the target structures and the illumination angles can be designed or adjusted so that the first order rays entering the objective lens are closely aligned with the central optical axis. The rays illustrated in **FIG. 3(a)** and **3(b)** are shown somewhat off axis, purely to enable them to be more easily distinguished in the diagram.

At least the 0 and +1 orders diffracted by the target structure T on substrate W are collected by objective lens 16 and directed back through beam splitter 15. Returning to **FIG. 3(a)**, both the first and second illumination modes are illustrated, by designating diametrically opposite apertures labeled as north (N) and south (S). When the incident ray I of measurement radiation is from the north side of the optical axis, that is when the first illumination mode is applied using aperture plate 13N, the +1 diffracted rays, which are labeled +1(13N), enter the objective lens 16. In contrast, when the second illumination mode is applied using aperture plate 13S the -1 diffracted rays (labeled -1(13S)) are the ones which enter the lens 16.

A second beam splitter 17 divides the diffracted beams into two measurement branches. In a first measurement branch, optical system 18 forms a diffraction spectrum (pupil plane image) of the target structure on first sensor 19 (e.g. a CCD or CMOS sensor), which may also be referred to as a detector 19, using the zeroth and first order diffractive beams. Each diffraction order hits a different point on the sensor, so that image processing can compare and contrast orders. The pupil plane image captured by sensor 19 can be used for focusing the metrology apparatus and/or normalizing intensity measurements of the first order beam. The pupil plane image can also be used for many measurement purposes such as reconstruction.

In the second measurement branch, optical system 20, 22 forms an image of the target structure T on sensor 23 (e.g. a CCD or CMOS sensor), which may also be referred to as a detector 23. In the second measurement branch, an aperture stop 21 (or 21') is provided in a plane that is conjugate to the pupil-plane. Aperture stop 21 functions to block the zeroth order diffracted beam so that the image of the target formed on sensor 23 is formed only from the -1 or + 1 first order beam. Top and side sectional views of an example form for the aperture stop 21 are shown, respectively labelled 21a and 21b. The images captured by sensors 19 and 23 are output to processor PU which processes the image, the function of which will depend on the particular type of measurements being performed. Note that the term 'image' is used here in a broad sense. An image of the grating lines as such will not be formed, if only one of the -1 and +1 orders is present.

When monitoring a lithographic process, it is desirable to monitor focus of the lithography beam on the substrate. One known method of determining the focus setting from a printed structure is by measuring the critical dimension (CD) of the printed structure. CD is a measure of the smallest feature (e.g., line width of an element). The printed structure may be a target, such as a line-space grating, formed specifically for focus monitoring. It is known that CD usually displays 2nd order response to focus, forming what is known as a "Bossung curve" on a plot of CD (y-axis) against focus (x-axis). A Bossung curve is a substantially symmetrical curve which is substantially symmetrical around a peak representing the best focus. The Bossung curve may be substantially parabolic in shape. There are several drawbacks to this approach. One drawback is that the method shows low sensitivity near best focus (due to the parabolic shape of the curve). Another drawback is that the method is insensitive to the sign of any defocus (as the curve is largely symmetrical around best focus). Also this method is sensitive to inter alia dose and process variation (crosstalk).

To address these issues, diffraction based focus (DBF) was devised. Diffraction based focus may use target forming features on the reticle which print targets designed to have a degree of asymmetry which is dependent on the focus setting during printing. This degree of asymmetry can then be measured using a scatterometery based inspection method, for example by measuring the intensity asymmetry between the intensities of + 1 and -1 order radiation diffracted from the target, to obtain a measure of the focus setting. Such a method may be performed using the metrology tool illustrated in **FIG. 3(a)**, for example.

As discussed in the introductory part of the description, known detectors have various shortcomings.

Embodiments of the present disclosure address one or more of these shortcomings and/or provide other advantages.

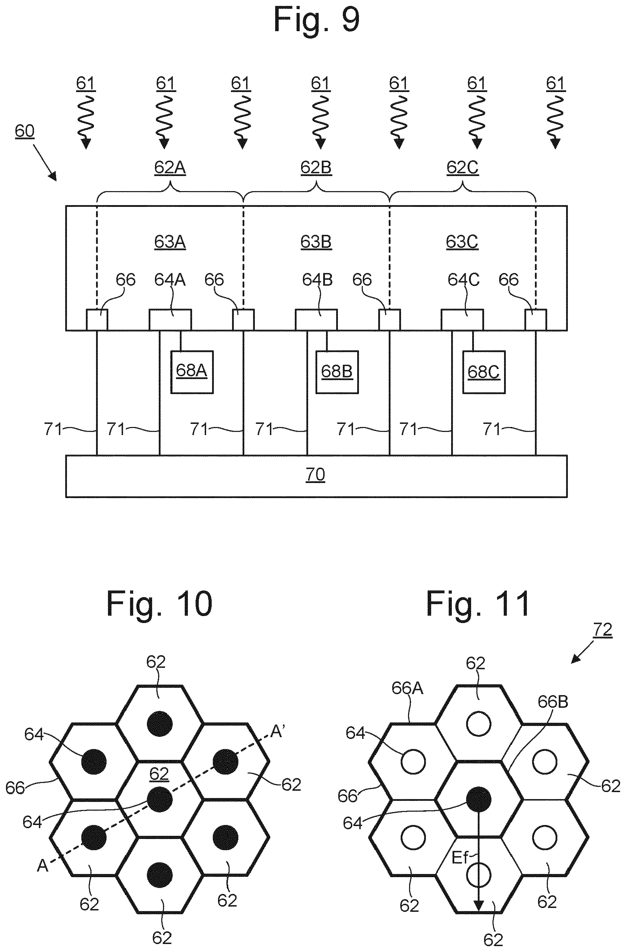

An example detector 60 is described with reference to **FIG. 9-15**. The detector 60 is configured to detect radiation 61 incident on the detector 60. The radiation 61 may comprise electromagnetic radiation (e.g., visible and non-visible such as X rays), charged particles such as electrons, or both electromagnetic radiation and charged particles. The radiation 61 that the detector 60 is configured to detect may be referred to as target radiation. The detector 60 comprises a plurality of pixel elements 62 and a plurality of control electrodes 66. In the examples shown in **FIG. 9-15**, the pixel elements 62 are arranged in a close-packed hexagonal array. Each of the smallest hexagons shown in **FIG. 10, 11, 12 and 14** corresponds to a different individual pixel element 62.

**FIG. 9** is a side sectional view relative to plane A-A' shown in **FIG. 10**. The sectional view of FIG. 9 cuts through three individual pixel elements 62 (labelled 62A, 62B, 62C in **FIG. 9**). Each pixel element 62 comprises a respective pixel substrate 63 (labelled 63A, 63B, 63C for the three pixel elements shown in **FIG. 9**), a respective collection electrode 64 (labelled 64A, 64B, 64C for the three pixel elements shown in **FIG. 9**), and a respective readout circuit 68 (labelled 68A, 68B, 68C for the three pixel elements shown in **FIG. 9**. The pixel substrates 63 are configured such that impingement of target radiation on the pixel substrates 63 generates charge carriers in the pixel substrates 63. The pixel substrates 63 may for example comprise semiconductor material and the charge carriers may comprise electron-hole pairs. The semiconductor material may comprise silicon or other materials (low band-gap or wide band-gap materials). The readout circuits 68 are configured to provide an output responsive to collection of the charge carriers by the respective collection electrodes. The charge carriers are driven to the collection electrodes 64 by electric fields in the pixel substrates 63. The electric fields are generated and controlled by the collection electrodes 64 and the control electrodes 66. The readout circuits 68 may be configured to convert charge to a voltage, for example by integrating an electrical current associated with the flow of charge carriers using a capacitor and using the voltage across the capacitor to provide the output. The readout circuits 68 may be controlled via suitable control signals to periodically sample the voltage across the capacitor and to reset the circuit, for example in a sequence of time intervals that may be referred to as measurement frames. In some embodiments, two samples of the voltage may be obtained per measurement frame to perform correlated double sampling. The detailed configuration of the readout circuits 68 is not particularly limited. Any technique suitable for measuring charge flowing to the collection electrodes may be used.

The detector 60 shown in **FIG. 9** is configured for front-side illumination. In this mode, the radiation 61 impinges onto the detector 60 on a side of the detector 60 opposite to where the collection electrodes 64 and control electrodes 66 are located (from above in the orientation of **FIG. 9**). In other embodiments, the detector 60 can operate in a backside illumination mode where the radiation impinges onto a side of the detector 60 where the collection electrodes 64 and control electrodes 66 are located. The collection electrodes and/or control electrodes 66 can be formed from transparent material.

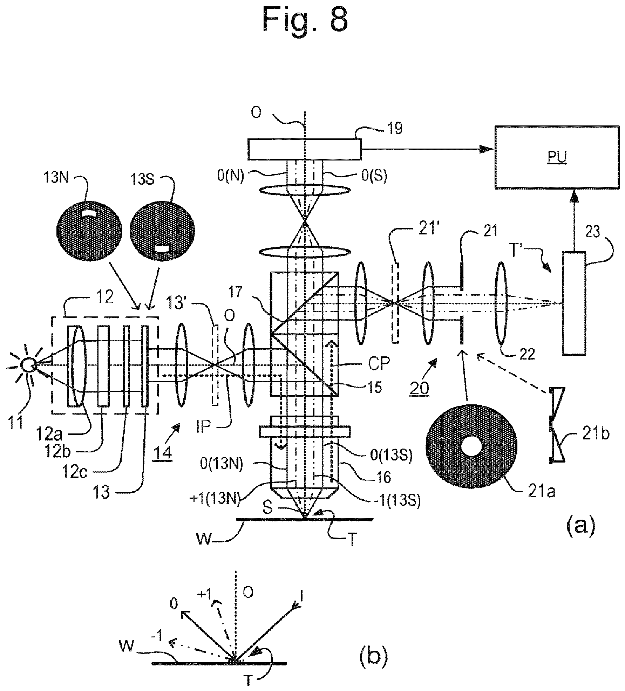

The detector 60 comprises a control system 70. The control system 70 controls the detector 60 to perform various functions as described below. The control system 70 may comprise or consist of a controller 50 or processor PU taking any of the forms described above with reference to **FIG. 1** and **8** respectively. The control system 70 may additionally control elements of an assessment apparatus or assessment system. The control system 70 may comprise a single unit configured to perform all of the control functionality or may comprise a distributed system of units that together allow the required functionalities to be achieved. Such a distributed system may have one or more elements located in and/or associated with different components or modules. The control system 70 may be at least partially computer implemented. Any suitable combination of elements (e.g., CPUs, RAM, data storage, data connections, sensors, etc.) may be provided and suitably programmed to achieve some or even all the specified functionality. Any reference herein to an apparatus, device or system being configured to perform functionality is intended to encompass the case where the control system 70 is configured to cause the functionality to be performed (e.g., by being suitably programmed to provide control signals that cause the functionality to happen).

The control system 70 controls potentials applied to the control electrodes 66 and the collection electrodes 64 via respective routing lines 71. The control system 70 implements a plurality of selectable resolution modes by controlling the potentials. The control system 70 may allow a user to choose between the plurality of resolution modes by providing suitable instructions to the control system 70. Alternatively or additionally, the control system 70 may be configured to switch automatically between different resolution modes, for example based on predetermining criteria or input data representing a state and/or operating mode of an assessment system in which the detector 60 is used.

The plurality of selectable resolution modes are implemented by controlling the potentials to define a corresponding plurality of mappings (e.g., one mapping per resolution mode) between the pixel substrates 63 in which charge carriers are generated and the collection electrodes 64 that collect those charge carriers. This can be achieved because the potentials define an electrical field in the pixel substrates 63 and the electric field will define how the charge carriers move in the pixel substrates 63.

At least two resolution modes may be provided in which the mappings are such that different numbers of the collection electrodes 64 are used to collect charge carriers from all of the pixel elements 62. The resolution modes may comprise a high resolution mode and one or more low resolution modes. The low resolutions modes may provide different resolutions by grouping pixel elements into differently sized superpixels and/or differ in other ways, such as by providing different collection capacitances in the superpixels. Grouping pixels into superpixels lowers resolution but may improve (increase) frame rate, lower power consumption, and/or increase field of view (FOV).

In an embodiment, the control system 70 is configured to implement a high resolution mode defined by a one-to-one mapping between the pixel substrates 63 and the collection electrodes 64. The one-to-one mapping is such that the charge carriers generated in each pixel substrate 63 are collected exclusively by the collection electrode 64 of the same pixel substrate 63. Thus, in the portion depicted in **FIG. 9**, for example, charge due to charge carriers generated by radiation impinging in pixel substrate 63A will flow to and be collected by the collection electrode 64A associated with (e.g., directly contacting) that pixel substrate 63A. Similarly, charge carriers generated in pixel substrate 63B will cause charge to be collected by collection electrode 64B, and charge carriers generated in pixel substrate 63C will cause charge to be collected by collection electrode 64C. The output from each readout circuit 68 will thus provide independent information about radiation impinging on a single respective one of the pixel elements 62.

In an embodiment, the control system 70 implements the high resolution mode by applying an equipotential to the control electrodes 66 along paths separating all of the pixel substrates 63 from each other when viewed perpendicularly to a plane of the detector 60. The plane of detector 60 may be perpendicular to an average direction of incidence on the detector 60 of the target radiation to be detected. The plane of the detector 60 is perpendicular to the plane of the page in **FIG. 9** and parallel to the plane of the page in **FIG. 10**, **11**, **12** and **14**. Implementation of the high resolution mode is depicted schematically in **FIG. 10** by indicating in bold lines the paths to which an equipotential is applied. The paths individually surround each and every one of the seven pixel elements 62 shown. In an embodiment, the equipotential may be a ground voltage. Applying an equipotential to paths that surround all of the pixel elements 62 effectively isolates each pixel element 62 from all of the other pixel elements. Charge carriers cannot propagate between different pixel elements 62. A common potential may be applied to the collection electrodes 64 (i.e., the same potential to each collection electrode 64) during the high resolution mode. This may ensure that the electric field distribution is the same in each pixel element 62 (where each pixel element 62 has the same shape) and thereby ensure spatially uniform performance of the detector 60 (e.g., each pixel element 62 performs in the same way as every other pixel element 62).

In an embodiment, the control system 70 implements a low resolution mode defined by a mapping in which at least a subset of the pixel elements 62 are grouped to form respective superpixels 72. Charge carriers generated in all of the pixel substrates 63 of each superpixel 72 are collected by a subset (i.e., less than all) of the collection electrodes 64 in the pixel elements 62 of the superpixel 72. The subset may consist of a single collection electrode 64 (which may be referred to as a common collection electrode 64) or a plurality of collection electrodes 64 consisting of fewer than all of the collection electrodes 64 of the pixel elements 62. An example of a superpixel 72 containing seven pixel elements 62 is shown in **FIG. 11**. In this example, the subset of collection electrodes 64 consists of a single collection electrode 64 in the center. The active nature of this collection electrode 64 is depicted schematically by showing the collection electrode 64 as a filled black circle. All of the other collection electrodes 64 in the superpixel 72 are inactive (i.e., not used to collect charge) and are depicted schematically as open circles.

The control system 70 may define the mapping of the low resolution mode by controlling the potentials of the control electrodes 66 and the collection electrodes 64 to allow charge carriers to flow between pixel substrates 63 of each superpixel 72 while remaining within the respective superpixel 72. Thus, in contrast to the situation in **FIG. 10** where charge carriers are restricted to move within the pixel substrates 63 in which the charge carriers are generated, in the low resolution mode of **FIG. 11** charge carriers can move between different pixel substrates 63, such as from the outermost pixel elements 62 to the central pixel element 62.

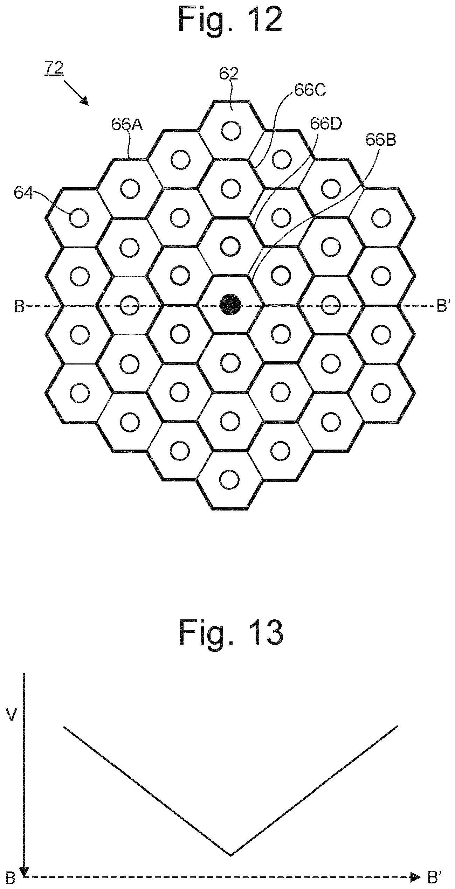

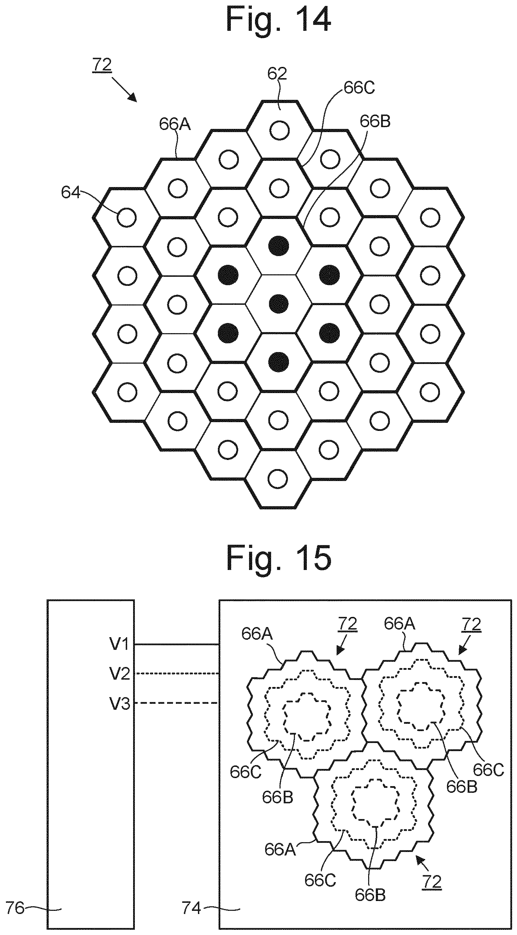

In some embodiments, as exemplified in **FIG. 11**, **12** and **14**, the control system 72 defines the mapping of the low resolution mode by, for each superpixel 72, when viewed perpendicularly to the plane of the detector 60: applying an outer equipotential along a control electrode defining an outer path 66A surrounding all of the pixel substrates 63 of the superpixel 72. The outer path 66A is shown in bold in **FIG. 11** and can be seen to surround all seven of the pixel elements 62. In **FIG. 12** and **14**, the outer path 66A surrounds all 37 of the pixel elements 62.

In some embodiments, as exemplified in **FIG. 11, 12** and **14**, the control system 70 defines the mapping of the low resolution mode by defining equipotentials along multiple paths 66A, 66B, 66C, 66D each shown in bold. The paths may form approximately concentric loops. For example, for each superpixel 72, when viewed perpendicularly to the plane of the detector 60, the control system 70 may apply an outer equipotential along a control electrode defining an outer path 66A surrounding all of the pixel substrates 63 (and thus pixel elements 62) of the superpixel 72. Additionally, a different, inner equipotential is applied to a control electrode defining an inner path 66B surrounding at least one of the pixel substrates 63 of the superpixel 72. In the examples of **FIG. 12** and **14,** one or more additional intermediate equipotentials are applied along respective intermediate paths, as discussed in further detail below. Thus, different potentials are applied to control electrodes surrounding different regions in the superpixel 72.

The inner path 66B may surround the pixel substrate 63 of a pixel element 62 comprising the collection electrode 64 (where there is only one active collection electrode 64), or at least one of the collection electrodes 64 (where there is more than one active collection electrode 64) in the subset of collection electrodes used to collect charge from the pixel elements of the superpixel 72. As exemplified in **FIG. 11** and **12**, the inner path 66B surrounds the single active collection electrode 64 (filled black circle) where there is only one such collection electrode 64 per superpixel 72. Where plural active collection electrodes 64 are present in a superpixel 72, the inner path 66B may surround at least one of the active collection electrodes 64, optionally all of the active collection electrodes 64 (as exemplified in **FIG. 14**). Thus, at least one collection electrode 64 used to collect charge in the superpixel 72 is surrounded by concentric equipotential paths defining a potential gradient and a corresponding electric field that drives charge carriers generated in the pixel substrates 63 of the pixel elements 62 of the superpixel 72 efficiently towards the active collection electrode 64 (or active collection electrodes 64).

In an embodiment, as exemplified in **FIG. 11, 12** and **14**, the outer path 66A defines a shape having a geometrical center (the center of the centermost hexagon in the examples shown). At least one of the collection electrodes 64 of the subset of collection electrodes 64 of the superpixel 72 (i.e., the active collection electrode 64 or active collection electrodes 64) is closer to the geometrical center than all other collection electrodes 64 of the superpixel 72. Where the subset consists of the single collection electrode 64, the single collection electrode 64 may be closer to the geometrical center than all other collection electrode 64 of the superpixel 72. In an embodiment, at least one of the collection electrodes 64 of the subset substantially coincides and/or overlaps with the geometrical center. Thus, the control system provides active collection electrodes 64 substantially centrally within the superpixels 72. This may help to provide spatially uniform collection efficiency within each superpixel 72.

In an embodiment, as exemplified in **FIG. 12** and **14**, the control system 70 is further configured, when implementing the low resolution mode, to apply an intermediate equipotential along an intermediate path 66C, 66D. The intermediate path 66C, 66D surrounds a subset of the pixel substrates 63 of the superpixel 72. The subset comprises a plurality of the pixel substrates 63. The potential of the intermediate equipotential is between the potentials of the outer equipotential (along path 66A) and the inner equipotential (along path 66B). In the example of **FIG. 12**, two intermediate equipotentials are applied along respective intermediate paths 66C and 66D but more than two or fewer than two intermediate paths may be provided. Potentials are applied to the paths (66A, 66B, 66C, 66D and any other paths defining equipotentials) to define a potential gradient towards the active collection electrode 64 or active collection electrodes 64 to enhance collection efficiency and/or frame rate. An example potential gradient along line B-B' is depicted in **FIG. 13**. The constant gradient towards the center of the superpixel 72 defines a uniform electrical field.

In an embodiment, the low resolution mode comprises plural sub-modes. Each of the sub-modes is such that the subset of collection electrodes used to collect the charge carriers in each superpixel 72 (i.e., the active collection electrodes shown by filled black circles in **FIG. 11**, **12** and **14**) contains a different number of collection electrodes in each sub-mode. Using different numbers of active collection electrodes per superpixel 72 may provide different respective collection capacitances in each sub-mode. Providing the ability to switch between different sub-modes of this nature may make it possible to adapt to changes in a flux of target radiation. For example, a sub-mode having a larger number of active collection electrodes per superpixel 72 may be selected for a relatively large flux of radiation. A sub-mode having a smaller number of active collection electrodes 64 per superpixel 72 (e.g., a single active collection electrode 64 per superpixel 72) may be selected for a relatively small flux of radiation. **FIG. 12** depicts an example sub-mode having a single active collection electrode per superpixel 72, which may be suitable for a relatively low flux of radiation. **FIG. 14** depicts an example sub-mode having seven active collection electrodes 64 per superpixel 72, which may be suitable for a larger flux of radiation.

In some embodiments, the mapping of the low resolution mode is configured to provide a plurality of substantially identical superpixels 72, each superpixel 72 optionally comprising the same number of pixel elements 62. In other embodiments, the mapping of the low resolution mode may provide regions of different resolution. Such a low resolution mode may be referred to as a mixed resolution mode. The regions of different resolution may comprise individual pixel elements and/or superpixels of different sizes. Alternatively or additionally, the regions of different resolution may be providing by different sized pixel elements 62. The regions of different resolution may have different ratios of pixel elements to collection electrodes 64 configured to collect charge carriers (active collection electrodes 64). For example, one or more of the regions may have a 1:1 ratio of pixel elements 62 to collection electrodes 64 configured to collect charge carriers (i.e., providing high spatial resolution), and one or more other regions may have an N:1 ratio of pixel elements 62 to active collection electrodes 64, where N is equal to or greater than 2. The regions having an N:1 ratio of pixel elements 62 to active collection electrodes 64 may provide lower spatial resolution. Such an arrangement may be useful where it is expected that information of most interest will be located in particular regions of an image captured by the detector 60, such as in a central region, and that other regions of the image may be less valuable, such as peripheral regions. The regions of different resolution may thus comprise a central region and one or more peripheral regions, with the central region being configured to have a higher resolution than one or all of the one or more peripheral regions. The control system 70 can use the ability to spatially vary the resolution to enhance resolution in portions of the detector 60 that correspond to regions of interest and decrease resolution in other regions, thereby reducing data transmission requirements, enhancing frame rates and/or reducing power consumption. For example, the regions of different resolution may include a higher fluence region having higher resolution (e.g., the central region) and one or more lower fluence regions having lower resolution (e.g., the one or more peripheral regions). In use, the fluence of target radiation is higher in the higher fluence region than in the one or more lower fluence regions. Thus, regions of interest where resolution is to be enhanced may correspond to regions where a higher fluence of target radiation is expected and/or occurs.

The geometrical arrangement of pixel elements 62 is not particularly limited. In some embodiments, the pixel substrates 63 of the pixel elements 62 are provided in a tessellating pattern to provide efficient space filling. In some embodiments, the pixel substrates 63 are hexagonal, as exemplified in **FIG. 10** to **14**. This provides good space filling and facilitates grouping of pixel elements 62 into approximately circular superpixels 72. This may facilitate generation of substantially uniform electric fields in the superpixels 72, which may promote spatially uniform performance, such as uniform collection efficiency and good readout speed, as well as facilitating routing of electrical connections to provide the control electrodes. In the examples shown all of the pixel substrates 63 have the same size. This may facilitate provision of spatially uniform performance. In other embodiments, the pixel substrates 63 may have a range of different sizes (e.g., two or more different sizes). In the case of a hexagonal array of pixel elements 62, approximately circular superpixels 72 can be obtained by grouping of pixels into hexagonal shapes (as shown in FIG. 11, 12 and 14). Progressively larger superpixels 72 can be obtained by progressively adding rings of pixel elements 62 around a single starting pixel element 62. The total number of pixel elements 62 in such hexagonal superpixels 72 will be given by the formula for a centered hexagonal number

$$H(n) = 1 + 6 \left( \frac{n(n-1)}{2} \right)$$

. Thus, in the examples of **FIG. 10** and **11** the superpixels 72 contain 7 pixel elements 62 (corresponding to n = 2 in the formula) and in the examples of **FIG. 12** and **14** the superpixels 72 contain 37 pixel elements 62 (corresponding to n = 4 in the formula).

In other embodiments, the pixel elements 62 may have other shapes and/or arrangements. The pixel elements 62 may, for example, be regular or irregular polygons having fewer or more than six sides, including rectangles and squares, or be circular or oval.

**FIG. 15** schematically depicts example routing of electrical connections to the control electrodes for three superpixels 72 in an active pixel area 74. The superpixels 72 each have control electrodes providing three different equipotentials along three paths 66A, 66B and 66C as described above with reference to **FIG. 14**. In this particular example, the different equipotentials are independently controlled via voltages V1, V2 and V3 applied in a periphery region 76. As indicated respectively by the solid line, dotted line and dashed line,b voltage V1 corresponds to paths 66A, voltage V2 corresponds to paths 66C and voltage V3 corresponds to paths 66B. The routing may be provided by purely metallic paths or a combination of metal and a semiconductor such as polysilicon to allow for smooth control of voltage through resistive voltage drops. Highly doped paths of semiconductors may be used to provide conduction. Semiconductor materials such as polysilicon can be used to implement equipotentials where there is negligible current flow.

In an embodiment, partially or fully enclosed shallow or deep trench isolation is provided between pixel elements 62.

In some embodiments, voltages applied to the control electrodes 66 can be controlled using a potential divider arrangement. Using a potential divider arrangement may facilitate routing requirements. In one arrangement, for example, a high resistance element, such as a strip of polysilicon, may be connected between a reference voltage (e.g., ground) and one of the control electrodes 66, such as the control electrode 66B around the innermost pixel element 62 in the arrangement of **FIG. 12**. The voltage will vary smoothly as a function of position along the strip between the voltages applied at either end. Any desired intermediate voltages can be obtained by branching an electrical connection off the strip at an appropriate location. Referring to the example of **FIG. 12** as an illustration, if one end of the strip were connected to ground and the other end connected to the control electrode 66B, voltages for the control electrodes 66D, 66C and 66A could be obtained via respective branched connections at locations along the strip that are progressively further away from the control electrode 66B.

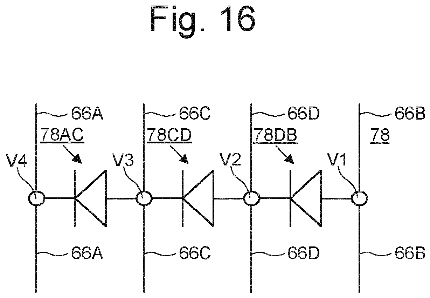

Alternatively or additionally, a diode arrangement may be used to provide the different voltages. This may be implemented using MOSFETs configured to function as diodes for example. Such diodes may be arranged in series along a similar overall path to the high resistance strip discussed above. For example, the series of diodes may be connected between the control electrode 66B in **FIG. 12** and the control electrode 66A. Connections to intermediate control electrodes 66C and 66D can be made from locations in the series of diodes between different respective pairs of diodes. An example configuration is depicted schematically in **FIG. 16**. The example shown is based on the configuration of **FIG. 12.** The configuration comprises three diodes 78 connected in series between the control electrode 66B (on the right) and the control electrode 66A (on the left). A voltage $V1$ is applied at the control electrode 66B and, as explained below, can be used to control the voltages at all of the other control electrodes connected to the series arrangement of diodes. Thus, a single voltage connection can provide control of multiple different control electrodes 66, which facilitates routing requirements. In the example shown, the voltage of the control electrode 66D is labelled V2, the voltage at control electrode 66C is labelled V3, and the voltage at control electrode 66A is labelled V4.

Each diode 78 operates to isolate one side of the diode from the other side of the diode (i.e., to operate in a blocking mode) unless a voltage across the diode is applied that has the correct polarity and a magnitude above a minimum threshold voltage $Vt$ for the diode 78 (in which case the diode operates in a forward mode and conducts). In the example of **FIG. 16**, if the voltage $V1$ applied to the control electrode 66B is less than $Vt$ diode 78DB will be in the blocking mode and there will be no connections to any of the control electrodes 66D, 66C and 66A. All of the control electrodes 66 are isolated from each other. In this condition, the pixel elements 62 can be operated in a high resolution mode corresponding to the condition in **FIG. 10**, with charge carriers being restricted to move within the pixel substrates 63 in which the charge carriers are generated. All of the collection electrodes 64 are active in this mode.

Increasing $V1$ to be higher than $Vt$ will allow binning of pixel elements 62 into superpixels 72. The magnitude of $V1$ determines the number of control electrodes 66 that are powered on and therefore the sizes of the superpixels 72. For example, if $Vt = 1V$, increasing $V1$ to 1.5$V$ will cause the diode 78DB between control electrodes 66D and 66B to conduct, which will cause V2 to become 0.5V. The potential difference across the next diode 78CD (between control electrodes 66C and 66D) will be lower than $Vf$ and so will be in blocking mode. Thus, applying 1.5V to control electrode 66B powers control electrode 66B and the next control electrode 66D. Seven pixel elements 62 are binned to create a superpixel 72 and a suitable electric field is established that directs charge carriers towards a single collection electrode 64 at the center of the superpixel 72. Increasing the voltage applied to control electrode 66B above 2V, for example to 2.5V, will cause the next control electrode 66C to be powered on (with V3 = 0.5V, V2 = 1.5V, and $V1$ = 2.5V), which could be used to bin together 19 pixel elements into a single superpixel 72. Increasing the voltage applied to control electrode 66B above 3V, for example to 3. 5V, will cause the next control electrode 66A to be powered on (with $V4$ = 0.5V, V3 = 1.5V, V2 = 2.5V, and $V1$ = 3.5V), which could be used to bin together 37 pixel elements into a single superpixel 72.

Detectors according to the embodiments described above provide enhanced flexibility for varying resolution and other operating parameters. This means that the same detector can be used effectively in a wider range of scenarios than might be possible without the described functionality. A need to use multiple different detectors may be avoided, thereby saving cost and/or space. The enhanced flexibility may be leveraged particularly effectively in the context of assessment systems for use in lithography, such as for inspecting samples for defects or for measuring structures to obtain information about performance, such as overlay or CD. Such processes may use a variety of different types of radiation, including charged particles (e.g., for SEM or similar processes) and electromagnetic radiation (e.g., for optical measurements) and/or require different resolutions, speeds (frame rates), fields of view (FOVs), and/or full well capacities. Detectors according to embodiments disclosed herein can be controlled to vary these operating parameters to provide suitable operating properties for the application being addressed.

In an embodiment, an assessment system is provided that comprises both a charged particle device configured to expose a sample to charged particles and an optical measurement system configured to expose the sample with electromagnetic radiation. The charged particle device (e.g., electron-optical column) may take any of the forms described above with reference to **FIG. 1-7** or other forms. The optical measurement system may take any of the forms described above with reference to **FIG. 8** or other forms. In such an arrangement, a detector 60 according to any of the embodiments described herein may be configured to receive charged particles propagating to the detector 60 from the sample 208 due to the exposure of the sample 208 with charged particles by the charged particle device. The detector 60 may, for example, be used to perform any of the roles of detector 240 and/or detector module 402 referred to above. The same detector 60 may be configured to receive electromagnetic radiation propagating to the detector from the sample 208 due to the exposure of the sample with electromagnetic radiation by the optical measurement system. The detector 60 may, for example, be used to perform any of the roles of the sensors 19 and 23 referred to above. The control system 70 may be configured to select different resolution modes for respectively detecting the charged particles and the electromagnetic radiation. For example, the control system 70 may select a first resolution mode to detect charged particles and a second resolution mode, different from the first resolution mode, to detect electromagnetic radiation. The first resolution mode may typically be a lower resolution mode, involving use of fewer collection electrodes, than the second resolution mode. The first resolution mode may be faster than the second resolution mode and/or provide a larger field of view (FOV) and/or involve lower power consumption.

Reference to a component or system of components or elements being controllable to manipulate a charged particle beam in a certain manner includes configuring a controller or control system or control unit to control the component to manipulate the charged particle beam in the manner described, as well as optionally using other controllers or devices (e.g. voltage supplies and/or current supplies) to control the component to manipulate the charged particle beam in this manner. For example, a voltage supply may be electrically connected to one or more components to apply potentials to the components, such as in a non-limited list including the control lens array 250, the objective lens array 241, and the detector array 240.

References to upper and lower, up and down, above and below, etc. should be understood as referring to directions parallel to the (typically but not always vertical) up-beam and down-beam directions of charged particle beams impinging on the sample 208. Thus, references to up beam and down beam are intended to refer to directions in respect of the beam path independently of any present gravitational field.

Electron-optics described herein may take the form of a series of aperture arrays or electron-optical elements arranged in arrays along a beam or a multi-beam path. Such electron-optical elements may be electrostatic. In an embodiment all the electron-optical elements, for example from a beam limiting aperture array to a last electron-optical element in a beam path before a sample, may be electrostatic and/or may be in the form of an aperture array or a plate array. In some arrangements one or more of the electron-optical elements are manufactured as a microelectromechanical system (MEMS) (i.e. using MEMS manufacturing techniques). Electron-optical elements may have magnetic elements and electrostatic elements. For example, a compound array lens may feature a macro magnetic lens encompassing the multi-beam path with an upper and lower pole plate within the magnetic lens and arranged along the multi-beam path. In the pole plates may be an array of apertures for the beam paths of the multi-beam. Electrodes may be present above, below or between the pole plates to control and optimize the electromagnetic field of the compound lens array.

An assessment apparatus, tool or system according to the disclosure may comprise apparatus which makes a qualitative assessment of a sample (e.g. pass/fail), one which makes a quantitative measurement (e.g. the size of a feature) of a sample or one which generates an image of map of a sample. Examples of assessment apparatus, tools or systems are inspection tools (e.g. for identifying defects), review tools (e.g. for classifying defects) and metrology tools, or tools capable of performing any combination of assessment functionalities associated with inspection tools, review tools, or metrology tools (e.g. metro-inspection tools).

Functionality provided by the controller or control system or control unit may be computer-implemented. Any suitable combination of elements may be used to provide the required functionality, including for example CPUs, RAM, SSDs, motherboards, network connections, firmware, software, and/or other elements known in the art that allow the required computing operations to be performed. The required computing operations may be defined by one or more computer programs. The one or more computer programs may be provided in the form of media, optionally non-transitory media, storing computer readable instructions. When the computer readable instructions are read by the computer, the computer performs the required method steps. The computer may consist of a self-contained unit or a distributed computing system having plural different computers connected to each other via a network.

While the present invention has been described in connection with various embodiments, other embodiments of the invention will be apparent to those skilled in the art from consideration of the specification and practice of the invention disclosed herein. It is intended that the specification and examples be considered as exemplary only, with a true scope and spirit of the invention being indicated by the following claims and clauses.

Embodiments of the disclosure are defined in the following numbered clauses.

    1. A detector for detecting radiation, comprising:

        a plurality of pixel elements comprising respective pixel substrates, collection electrodes and readout circuits, wherein the pixel substrates are configured such that impingement of target radiation on the pixel substrates generates charge carriers in the pixel substrates, and the readout circuits are configured to provide an output responsive to collection of the charge carriers by the respective collection electrodes;
        a plurality of control electrodes; and
        a control system configured to implement a plurality of selectable resolution modes by controlling potentials applied to the control electrodes and the collection electrodes to define a corresponding plurality of mappings between the pixel substrates in which charge carriers are generated and the collection electrodes that collect those charge carriers.

    2. The detector of clause 1, wherein each of the mappings is such that different respective numbers of the collection electrodes are used to collect charge carriers from all of the pixel elements.

    3. The detector of clause 1 or 2, wherein the resolution modes comprise a high resolution mode defined by a one-to-one mapping between the pixel substrates and the collection electrodes, the one-to-one mapping being such that the charge carriers generated in each pixel substrate are collected by the collection electrode of the same pixel substrate.

    4. The detector of clause 3, wherein the control system is configured to implement the high resolution mode by applying an equipotential to the control electrodes along paths separating all of the pixel substrates from each other when viewed perpendicularly to a plane of the detector.

5. The detector of clause 4, wherein the control system is configured in the high resolution mode to apply a common potential to all of the collection electrodes.

6. The detector of any preceding numbered clause, wherein the resolution modes comprise a low resolution mode defined by a mapping in which at least a subset of the pixel elements are grouped to form respective superpixels and the charge carriers generated in all of the pixel substrates of each superpixel are collected by only a subset of the collection electrodes in the pixel elements of the superpixel, the subset consisting of a single collection electrode or a plurality of collection electrodes consisting of fewer than all of the collection electrodes of the pixel elements corresponding to the superpixel.

7. The detector of clause 6, wherein the control system is configured to define the mapping of the low resolution mode by controlling the potentials of the control electrodes and the collection electrodes to allow charge carriers to flow between pixel substrates of each superpixel while remaining within the respective superpixel.

8. The detector of clause 6 or 7, wherein the control system is configured to define the mapping of the low resolution mode by, for each superpixel, when viewed perpendicularly to the plane of the detector: applying an outer equipotential along a control electrode defining an outer path surrounding all of the pixel substrates of the superpixel.

9. The detector of clause 8, wherein the control system is further configured when defining the mapping of the low resolution mode to: apply an inner equipotential, different to the outer equipotential, to a control electrode defining an inner path surrounding at least one of the pixel substrates of the superpixel.

10. The detector of clause 9, wherein the inner path surrounds the pixel substrate of a pixel element comprising the collection electrode, or at least one of the collection electrodes, in the subset of the collection electrodes.

11. The detector of clause 9 or 10, wherein:

the outer path defines a shape having a geometrical center; and
at least one of the collection electrodes of the subset of collection electrodes of the superpixel is closer to the geometrical center than all other collection electrodes of the superpixel.

12. The detector of clause 11, wherein the subset consists of the single collection electrode and the single collection electrode is closer to the geometrical center than all other collection electrodes of the superpixel.

13. The detector of any of clauses 9 to 12, wherein the control system is further configured when defining the mapping of the low resolution mode to: apply an intermediate equipotential along an intermediate path surrounding a subset of the pixel substrates of the superpixel, the subset comprising a plurality of the pixel substrates, wherein the potential of the intermediate equipotential is between the potentials of the outer equipotential and the inner equipotential.

14. The detector of any of clauses 6 to 13, wherein the low resolution mode comprises plural sub-modes, each sub-mode being configured such that the subset of collection electrodes used to collect the charge carriers in each superpixel contains a different number of collection electrodes in each sub-mode, thereby providing different respective collection capacitances in each sub-mode.

15. The detector of any of clauses 6 to 14, wherein the mapping of the low resolution mode is configured to provide regions of different resolution, the regions of different resolution comprising individual pixel elements and/or superpixels of different sizes.

16. The detector of clause 15, wherein the regions of different resolution comprise a central region and one or more peripheral regions, wherein the central region is configured to have a higher resolution than one or all of the one or more peripheral regions.

17. The detector of any preceding numbered clause, wherein the pixel substrates of the pixel elements are provided in a tessellating pattern.

18. The detector of clause 17, wherein each of the pixel substrates is hexagonal.

19. The detector of any preceding clause, wherein the pixel substrates all have the same size.

20. The detector of any of clauses 1 to 18, wherein the pixel substrates have a range of different sizes.

21. An assessment system, comprising:

a charged particle device configured to expose a sample with charged particles;
an optical measurement system configured to expose the sample with electromagnetic radiation; and
the detector of any preceding numbered clause configured to receive charged particles propagating to the detector from the sample due to the exposure of the sample with charged particles, and to receive electromagnetic radiation propagating to the detector from the sample due to the exposure of the sample with electromagnetic radiation, wherein the control system is configured to select different resolution modes for respectively detecting the charged particles and the electromagnetic radiation.

22. A method of detecting radiation, comprising: applying potentials to control electrodes and to collection electrodes in a plurality of pixel elements comprising respective pixel substrates, collection electrodes and readout circuits, wherein:

impingement of target radiation on the pixel substrates generates charge carriers in the pixel substrates,

the readout circuits provide outputs responsive to collection of charge carriers by the respective collection electrodes, and

the method detects radiation in a plurality of resolution modes, each resolution mode being defined by controlling the potentials applied to the control electrodes and collection electrodes to define a respective mapping between the pixel substrates in which charge carriers are generated and the collection electrodes that collect those charge carriers.

23. The method of clause 22, wherein:

the resolution modes comprise a first resolution mode and a second resolution mode different from the first resolution mode;

the first resolution mode is used to detect charged particles; and

the second resolution mode is used to detect electromagnetic radiation.

24. The method of clause 23, wherein the first resolution mode is a lower resolution mode, involving use of fewer collection electrodes, than the second resolution mode.

25. The method of any of clauses 22 to 24, wherein the resolution modes comprise a mixed resolution mode in which the mapping provides regions of different resolution, the regions of different resolution including a higher fluence region and a lower fluence regions, wherein:

the fluence of the target radiation is higher in the higher fluence region than in the lower fluence region; and

the resolution is higher in the higher fluence region than in the lower fluence region.

## Claims

1. A detector for detecting radiation, comprising:

a plurality of pixel elements comprising respective pixel substrates, collection electrodes and readout circuits, wherein the pixel substrates are configured such that impingement of target radiation on the pixel substrates generates charge carriers in the pixel substrates, and the readout circuits are configured to provide an output responsive to collection of the charge carriers by the respective collection electrodes;

a plurality of control electrodes; and

a control system configured to implement a plurality of selectable resolution modes by controlling potentials applied to the control electrodes and the collection electrodes to define a corresponding plurality of mappings between the pixel substrates in which charge carriers are generated and the collection electrodes that collect those charge carriers.

2. The detector of claim 1, wherein each of the mappings is such that different respective numbers of the collection electrodes are used to collect charge carriers from all of the pixel elements.

3. The detector of claim 1 or 2, wherein the resolution modes comprise a high resolution mode defined by a one-to-one mapping between the pixel substrates and the collection electrodes, the one-to-one mapping being such that the charge carriers generated in each pixel substrate are collected by the collection electrode of the same pixel substrate.

4. The detector of claim 3, wherein the control system is configured to implement the high resolution mode by applying an equipotential to the control electrodes along paths separating all of the pixel substrates from each other when viewed perpendicularly to a plane of the detector.

5. The detector of claim 4, wherein the control system is configured in the high resolution mode to apply a common potential to all of the collection electrodes.

6. The detector of any preceding claim, wherein the resolution modes comprise a low resolution mode defined by a mapping in which at least a subset of the pixel elements are grouped to form respective superpixels and the charge carriers generated in all of the pixel substrates of each superpixel are collected by only a subset of the collection electrodes in the pixel elements of the superpixel, the subset consisting of a single collection electrode or a plurality of collection electrodes consisting of fewer than all of the collection electrodes of the pixel elements corresponding to the superpixel.

7. The detector of claim 6, wherein the control system is configured to define the mapping of the low resolution mode by controlling the potentials of the control electrodes and the collection electrodes to allow charge carriers to flow between pixel substrates of each superpixel while remaining within the respective superpixel.

8. The detector of claim 6 or 7, wherein the control system is configured to define the mapping of the low resolution mode by, for each superpixel, when viewed perpendicularly to the plane of the detector: applying an outer equipotential along a control electrode defining an outer path surrounding all of the pixel substrates of the superpixel.

9. The detector of claim 8, wherein the control system is further configured when defining the mapping of the low resolution mode to:

    apply an inner equipotential, different to the outer equipotential, to a control electrode defining an inner path surrounding at least one of the pixel substrates of the superpixel, wherein, optionally, the inner path surrounds the pixel substrate of a pixel element comprising the collection electrode, or at least one of the collection electrodes, in the subset of the collection electrodes.

10. The detector of claim 9, wherein:

    the outer path defines a shape having a geometrical center; and at least one of the collection electrodes of the subset of collection electrodes of the superpixel is closer to the geometrical center than all other collection electrodes of the superpixel, wherein, optionally, the subset consists of the single collection electrode and the single collection electrode is closer to the geometrical center than all other collection electrodes of the superpixel.

11. The detector of claim 9 or 10, wherein the control system is further configured when defining the mapping of the low resolution mode to: apply an intermediate equipotential along an intermediate path surrounding a subset of the pixel substrates of the superpixel, the subset comprising a plurality of the pixel substrates, wherein the potential of the intermediate equipotential is between the potentials of the outer equipotential and the inner equipotential.

12. The detector of any of claims 6 to 11, wherein the low resolution mode comprises plural sub-modes, each sub-mode being configured such that the subset of collection electrodes used to collect the charge carriers in each superpixel contains a different number of collection electrodes in each sub-mode, thereby providing different respective collection capacitances in each sub-mode.

13. The detector of any of claims 6 to 12, wherein the mapping of the low resolution mode is configured to provide regions of different resolution, the regions of different resolution comprising individual pixel elements and/or superpixels of different sizes, wherein, optionally, the regions of different resolution comprise a central region and one or more peripheral regions, wherein the central region is configured to have a higher resolution than one or all of the one or more peripheral regions.

14. An assessment system, comprising:

    a charged particle device configured to expose a sample with charged particles; an optical measurement system configured to expose the sample with electromagnetic radiation; and the detector of any preceding claim configured to receive charged particles propagating to the detector from the sample due to the exposure of the sample with charged particles, and to receive electromagnetic radiation propagating to the detector from the sample due to the exposure of the sample with electromagnetic radiation, wherein the control system is configured to select different resolution modes for respectively detecting the charged particles and the electromagnetic radiation.

15. A method of detecting radiation, comprising: applying potentials to control electrodes and to collection electrodes in a plurality of pixel elements comprising respective pixel substrates, collection electrodes and readout circuits, wherein:

    impingement of target radiation on the pixel substrates generates charge carriers in the pixel substrates, the readout circuits provide outputs responsive to collection of charge carriers by the respective collection electrodes, and the method detects radiation in a plurality of resolution modes, each resolution mode being defined by controlling the potentials applied to the control electrodes and collection electrodes to define a respective mapping between the pixel substrates in which charge carriers are generated and the collection electrodes that collect those charge carriers.

# Fig. 1

# Fig. 2

# Fig. 3

# Fig. 4

401

402

208

100µm    50µm

5kV

few kV

5kV– 10 to 100V

5kV

406

# Fig. 5

402

404

405

406

# Fig. 6

406

# Fig. 7

# Fig. 8

(a)

(b)

# Fig. 9

61 61 61 61 61 61 61

60

62A 62B 62C

63A 63B 63C

66 64A 66 64B 66 64C 66

68A 68B 68C

71 71 71 71 71 71 71

70

# Fig. 10

62

64

66

64

62

A'

62

A

62

62

62

# Fig. 11

72

62

66A 66B

64

66

64

62

Ef

62

62

62

# Fig. 12

# Fig. 13

# Fig. 14

# Fig. 15

# Fig. 16

| | Europäisches<br>Patentamt<br>European<br>Patent Office<br>Office européen<br>des brevets | **EUROPEAN SEARCH REPORT** | **Application Number**<br>**EP 22 20 3271** |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | US 2017/299734 A1 (LEE DONG-JIN [KR] ET AL) 19 October 2017 (2017-10-19) | 1,15 | INV.<br>G01T1/24 |
| Y | * paragraphs [0025] – [0027], [0034], [0043] – [0054] *<br>* figures 1-3 * | 2-14 | |
| Y | EP 0 655 860 B1 (KONINKL PHILIPS ELECTRONICS NV [NL]) 10 May 2000 (2000-05-10) | 2-14 | |
| A | * paragraphs [0006], [0018] – [0020] *<br>* figures 1-3 * | 1,15 | |
| A | US 2018/130838 A1 (TIAN HUI [US] ET AL) 10 May 2018 (2018-05-10)<br>* paragraphs [0098] – [0104] *<br>* figures 1-2 * | 1-15 | |
| | | | TECHNICAL FIELDS<br>SEARCHED (IPC)<br><br>G01T<br>H01L |

| | | | |
|---|---|---|---|
| | The present search report has been drawn up for all claims | | |
| | Place of search<br>**The Hague** | Date of completion of the search<br>**13 March 2023** | Examiner<br>**Wulveryck, J** |

EP 4 361 683 A1

## ANNEX TO THE EUROPEAN SEARCH REPORT
## ON EUROPEAN PATENT APPLICATION NO.

EP 22 20 3271

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2023

| Patent document cited in search report | | Publication date | Patent family member(s) | | Publication date |
|---|---|---|---|---|---|
| US 2017299734 | A1 | 19-10-2017 | KR 20160038387 A | | 07-04-2016 |
| | | | US 2017299734 A1 | | 19-10-2017 |
| | | | WO 2016052972 A1 | | 07-04-2016 |
| EP 0655860 | B1 | 10-05-2000 | BE 1007803 A3 | | 24-10-1995 |
| | | | EP 0655860 A1 | | 31-05-1995 |
| | | | JP H08206102 A | | 13-08-1996 |
| | | | US 6265736 B1 | | 24-07-2001 |
| US 2018130838 | A1 | 10-05-2018 | US 2015357360 A1 | | 10-12-2015 |
| | | | US 2018130838 A1 | | 10-05-2018 |
| | | | WO 2015191594 A1 | | 17-12-2015 |

EPO FORM P0459

For more details about this annex : see Official Journal of the European Patent Office, No. 12/82

31

**EP 4 361 683 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1602121 A1
- EP 20184160
- WO 2017186483 A1